# EUROPEAN PATENT SPECIFICATION

(11) **EP 0 680 250 B1**
(45) Date of publication and mention of the grant of the patent: **13.10.1999**
(21) Application number: 94905869.7
(22) Date of filing: 17.01.1994
(51) Int. Cl.: A01B 61/04

(54) **AN OVERLOAD PROTECTION MECHANISM FOR A TUBULAR PLOUGH BEAM**
ROHRPFLUGRAHMENÜBERLASTSICHERUNG
MECANISME DE PROTECTION CONTRE LES SURCHARGES POUR UN TIMON DE CHARRUE TUBULAIRE

(30) Priority: 19.01.1993 NO 930170
(43) Date of publication of application: 08.11.1995
(73) Proprietor: KVERNELAND KLEPP AS, N-4344 Kvernaland (NO)
(72) Inventor: TORGRIMSEN, Tor, N-4018 Stavanger (US)
(74) Representative: Orr, William McLean
(86) International application number: NO9400011
(87) International publication number: WO9416546

(56) References cited:
- EP-A- 0 023 258
- EP-A- 0 516 004
- FR-A- 2 670 358

## Description

This invention relates to an overload protection mechanism for a tubular plough beam, and of the kind as further defined in the preamble of the following claim 1.

The overload protection mechanism according to the invention may be used both for reversible ploughs and for non-reversible ploughs.

It is previously known plough beam overload protection mechanisms comprising a pivotable mounting of the plough beam at one end thereof and a flexible power-exerting device retaining the plough beam's plough body in ploughing position, but which allows the rotation thereof when the plough body hits an obstacle that has to be passed through vertical/lateral rotation of plough body/plough beam.

In conventional overload protection mechanisms of this kind, said flexible power-exerting device as a rule comprises a leaf spring aggregate, the spring characteristic of which being adjusted to the actual type of soil through removing/adding one or more leaf springs. Thus, such leaf spring aggregates are difficult to adjust to the soil in question. Moreover, they are rather comprehensive and space-demanding, so that it is difficult to position them such on the plough construction that it within reason can be achieved protection of the overload protection mechanism itself against external impact and shock loads.

It is known to incorporate a pressure fluid operated piston cylinder in such a flexible power-exerting overload protection mechanism, whereby one in a simpler way may control the pressure required in order to cause the overload protection mechanism to release. EP A1 23258, EP A2 516004 and DE A1 3522933 discloses examples of overload protection mechanisms of this kind. These are better protected against external impact and shock strains, comprise relatively few parts and are quite compact.

More specifically, EP A1 23258 which discloses the features of the preamble of claim 1 comprises an overload protection device comprising a rather comprehensive polygonal housing rigidly attached to the plough frame and wherein the piston cylinder is disposed. At the cylinder end, the piston cylinder is mounted in the housing by means of a ball joint. The plough beam engages into the housing with an end portion carrying a centering plate displaceable within the housing, wherein it, in the ploughing position of the plough body, may rest supportingly against stop faces. The piston rod end has a ball engaging into a complementarily shaped carrier on the centering plate.

EP A2 516004 discloses a relatively compact and functional secure overload protection device for ploughs, where each plough beam is supported on the plough frame through a linkage arm system and has a rotational joint on the plough frame, and where the piston cylinder is disposed directly within the tubular plough beam which, thus, must be dimensioned correspondingly.

FR-2670358 discloses a protection device for the teeth machine working for working soil. Each tooth is connected to a hollow tubular casing. Extending along the axis of the casing is a rod connected to the plough frame by a universal joint. Also located within the casing and extending along its axis is a compression means comprising a spring. This spring is connected to the casing at the end proximate to the frame and to the rod at the end remote from the frame. As the casing is pivoted from its equilibrium working position the casing pivots about a joint remote from the universal joint. The spring is therefore compressed so producing a restoring force which urges the casing back to its equilibrium working position.

DE A1 3522933 discloses a resilient return device for a plough beam with a plough body after these have come out of position upon passage of an obstacle. This resilient return device comprises a pressure spring in the form of a screw spring arranged in the interior of the tubular plough beam, one end thereof resting supportingly against a stop means stationarily placed in the front portion of the plough beam. A rod having a length almost corresponding to the plough beam, extends through the screw spring and has a stop disc for the opposite end of the spring. However, with an overload protection mechanism for the object in question, a flexible actuator means in the form of a fluid operated piston cylinder is preferred instead of a pressure spring in the form of a screw spring.

Thus, the present invention relates to an overload protection mechanism comprising a tubular plough beam carrying a plough body retained in ploughing position by means of a power-exerting device comprising a fluid pressure operated piston cylinder also included in said overload protection mechanism, in which the plough beam and the plough body carried by the former are adapted to temporarily leave the ploughing position when the plough body hits an obstacle in the soil, said obstacle being passed due to a rotation of the plough beam at a first end thereof articulately cooperating with a plough carrier, and in which the plough beam thereafter is brought to resume the position corresponding to the ploughing position of the plough body, wherein the piston cylinder is mounted within the plough beam carrier, surrounded by the latter, by means of a universal joint and characterised that the free end of the piston cylinder's piston rod is attached to the front end of a strut in the area of the front end of the tubular plough beam said strut being attached at its rear end to a second axial end of the tubular plough beam in the area of attachment for the plough body.

This results in a particularly space-saving and protected mounting of the piston cylinder, with full possibility for adjustment corresponding to vertical respectively lateral rotation of plough body/beam upon passage of an obstacle within the soil. Likewise, a design of the overload protection mechanism as compact as the above described known mechanisms is obtained.

A non-restricting example of an embodiment of an overload protection mechanism according to the present invention is further explained in the following, reference being made to the accompanying drawings, wherein;
Figure 1 shows a diagrammatical view of a tractor and a thereon mounted plough comprising plough beams wherein overload protection mechanisms according to the invention have been used;
Figure 2 is a side elevational view, partly in vertical section as well as enlarged in relation to figure 1, showing a plough beam assigned the overload protection mechanism according to the invention, the plough beam being pivotally disposed at the front end thereof, and where the plough beam is shown in two positions, corresponding to the normal ploughing position of the assigned plough body (dotted lines) and to the assigned plough body's passage over or laterally clear of an obstacle in the soil (plough beam shown in solid lines);
Figure 3 is a side elevational view, enlarged in relation to figure 2, partly in vertical section, of the over load protection mechanism according to the invention, disposed in the area of the plough beam carrier and the front end of the plough beam, and where the plough beam is shown in the same two positions as in figure 2;
Figure 4 is a top plan view of the overload protection mechanism in accordance with figure 3, partly in horizontal section.

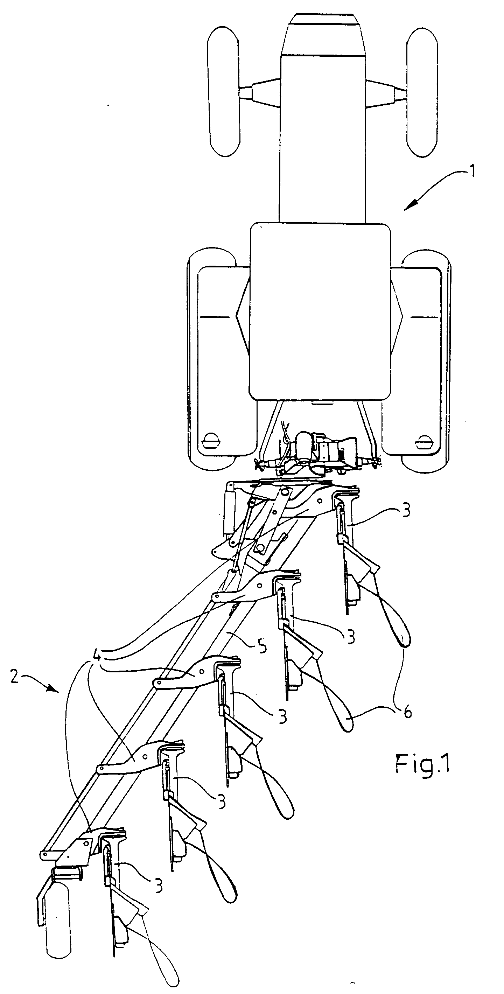

Figure 1 shows a general view of a tractor and a plough 2 mounted thereon, where reference numeral 3 denotes the five plough beams of the plough 2, and where reference numeral 4 denotes the plough beam carriers, 5 indicating the plough frame and 6 plough bodies.

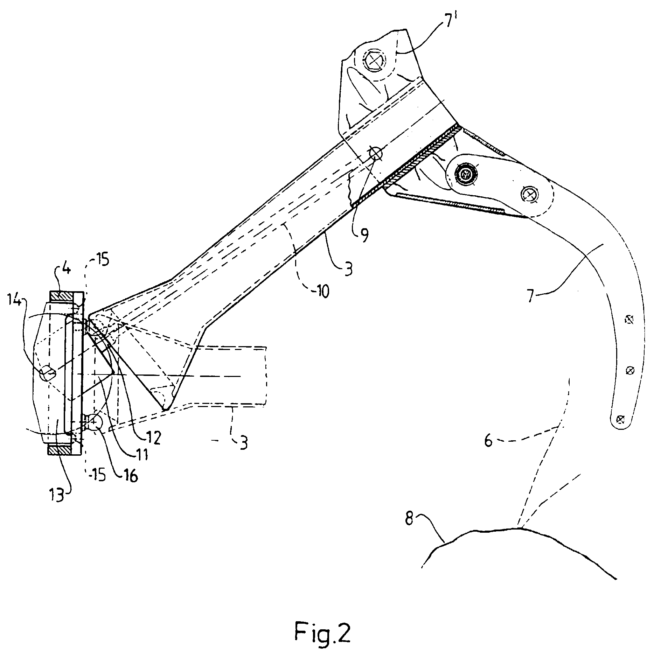

From figure 2 it will appear that the plough shown is a reversible plough, where each plough beam 3 carries two plough bodies 6 or fasteners for the same. The plough bodies themselves 6 and the attachment devices for the same to the plough beam 3 are not made the subject matter of the present invention, any suitable or appropriate attachment means being usable for this purpose. For an illustrative purpose, the plough beam 3 according to figure 2 is provided with fixing fish plates 7, 7' or the like for two plough bodies 6, disposed at the rear end of the plough beam. It goes without saying that figure 2 represents a partial view at the rear end of the plough beam.

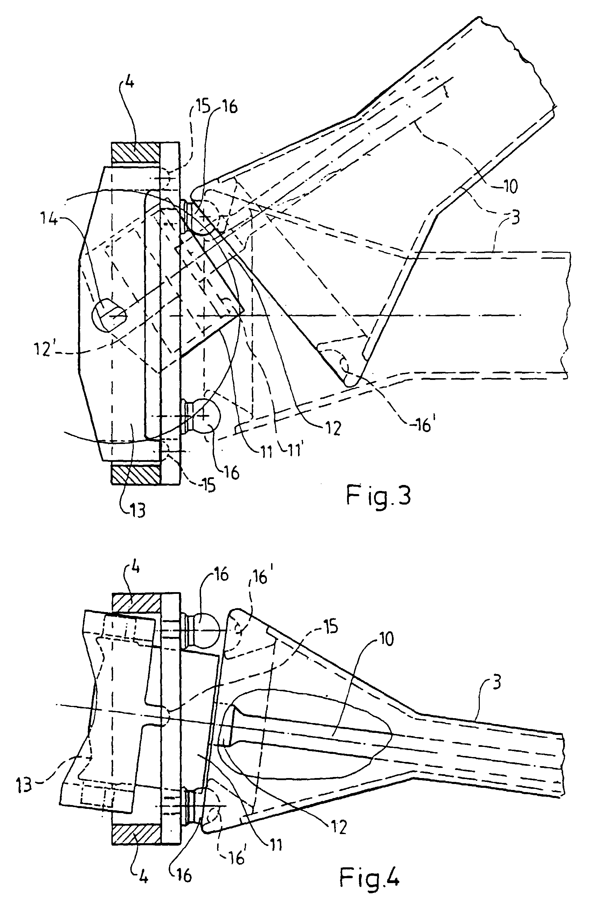

In figure 2, an outer portion of the operative plough body 6 is shown in dotted lines when it is in the course of passing over an obstacle (a stone) 8 within the soil, corresponding to the plough beam's 3 inclined position shown in solid lines in figure 2 and 3. The plough beam's horizontal, dotted position corresponds to the normal ploughing position of the plough body 6.

The plough beam 3, respectively each plough beam 3, is tubular as known per se, and has at the rear end thereof, adjacent the fixing fish plates 7, 7' for the plough bodies, a lateral fixing bolt 9 for a strut 10 extending in the main in the longitudinal direction of the tubular plough beam 3.

The front end of the strut 10 is attached to the piston rod 12 of a piston cylinder 11.

The piston cylinder 11 is pivotally mounted on a cradle 13 by means of a first pair of journals 14, the cradle 13 being pivotally mounted in the beam carrier 4 by means of a second pair of journals 15, fig. 3 og 4.

Each pair of journals 14 respectively 15 forms a pivot axis, and the two pivot axes are mutually perpendicular to each other, so that the piston cylinder 11 is mounted in the beam carrier 4 by means of the cradle 13-15 forming a universal joint, resulting in a space-saving and protected positioning of the piston cylinder 11, 12 in the plough construction, as well as a very favourable rotation of the piston cylinder 11 corresponding to the plough beam's 3 rotation in the vertical and/or horizontal plane.

When the overload protection mechanism according to the invention is in use in connection with a plough beam 3 of the shown and described type, a tension will be exerted in the strut 10 by means of a hydraulic pressure within the chamber 11' of the piston cylinder 11, urging the piston 12' rearwardly in the piston cylinder 11, thereby pulling in the strut 10. The tension in the strut 10 results in that the plough beam 3, at the front end thereof, becomes pulled towards four balls 16 mounted in the beam carrier 4, and with which four hemispherical seats 16' cooperate, said seats 16' being formed in the adjacent end of the plough beam 3, so that a hinge device, known per se, is formed between the beam carrier 4 and the plough beam 3, allowing vertical and/or lateral rotation (in the horizontal plane) of the plough beam 3 whenever the plough body 6 has to pass an obstacle 8 within the soil through moving/rotating above the obstacle or laterally of the same. The plough beam's 3 inclined position corresponding thereto, is shown in solid lines in figures 2 and 3.

As mentioned, said tension in the strut 10 causes the front end of the plough beam 3 with the four hemispherical seats 16' thereof to be pulled into engagement with the four balls 16 of the beam carrier 4, thereby establishing a stabil plough beam position, corresponding to dotted line position in figures 2 and 3.

When the plough body 6 attached to the plough beam 3, during ploughing, hits the obstacle 8, the plough body can be pressed upwardly, thereafter sliding over the obstacle 8, corresponding to the solid line position of the plough beam 3 in figures 2 and 3, where the plough beam 3 has made a rotation around the two uppermost ball joints 16,16'.

The strut 10 and the piston cylinder 11 will also rotate around the fixing bolt 9 and the two uppermost ball joints 16, 16'. Because of the geometric proportions involved, the piston 12' of the piston cylinder 11 will be pulled a little more outwards in the cylinder 11 when the plough beam 3 rotates around the ball joints 16,16'.

If the obstacle 8 in the soil seeks to press the plough body 6 laterally, i.e. more or less horizontally out from actual ploughing position, the plough beam 3 may rotate around the two ball joints 16,16' at the side and constituting a vertical ball joint pair and then, the plough beam 3 will move towards the position shown in figure 4, where the plough beam 3 in the horizontal plane forms an angle with the axis of the beam carrier 4. This lateral rotational movement may occur in the one direction or in the other, dependent on which way the obstacle 8 presses the plough beam 3. When the plough beam 3 moves laterally, the mounting cradle 13 of the piston cylinder 11 will rotate around the journals 15.

The plough beam 3 may also be pressed upwardly and laterally simultaneously. Then, it will rest on one of the four ball joints 16,16' only, but the front end thereof will at all times be pulled towards the remaining balls 16 of the beam carrier 4 by means of the strut 10.

This pull within the strut 10 is provided by supplying hydraulic oil under pressure (a hydraulic system is not shown in the drawings) to the chamber 11' within the piston cylinder 11. The pressure control that may be accomplished in several ways, is not directly the subject matter of the present invention, but represents well known technique requiring no further mentioning in this connection.

In the preferred embodiment shown in the figures of the drawings, the positioning and mounting of the piston cylinder 11 is very advantageous, namely located entirely in front of the plough beam 3, well protected partly within the plough beam carrier 4, and where the mounting of the piston cylinder 11 makes it easy to follow the rotational movements of the plough beam 3 whenever the overload protection mechanism releases because an obstacle 8 has to be passed.

Thus, the piston cylinder 11 may all times adjust itself such that a tension load as plain as possible occurs in the strut 10, the bending strain being minimum. This is due to the fact that the piston cylinder 11 is mounted in the beam carrier 4 by means of a universal joint, the two rotational axes thereof extending perpendicularly in relation to each other.

## Claims

1. An overload protection mechanism comprising a tubular plough beam (3) carrying a plough body (6) retained in ploughing position by means of a power-exerting device comprising a fluid pressure operated piston cylinder (11, 11',12,12') also included in said overload protection mechanism, in which the plough beam (3) and the plough body (6) carried by the former are adapted to temporarily leave the ploughing position when the plough body (6) hits an obstacle (8) in the soil, said obstacle being passed due to a rotation of the plough beam (3) at a first end thereof articulately co-operating (16,16') with a plough carrier (4), and in which the plough beam (3) thereafter is brought to resume the position corresponding to the ploughing position of the plough body (6), wherein the piston cylinder (11,11',12,12') is mounted within the plough beam carrier (4), surrounded by the latter, by means of a universal joint (13,14,15) and characterised that the free end of the piston cylinder's (11,11',12,12') piston rod (12) is attached to the front end of a strut (10) in the area of the front end of the tubular plough beam (3), said strut (10) being attached at its rear end to a second axial end of the tubular plough beam (3) in the area of attachment for the plough body (6).

2. An overload protection mechanism as set forth in claim 1, characterised in that the universal joint (13, 14, 15) further comprises a tiltable mounting cradle (13) in which the piston cylinder (11, 11', 12, 12') is pivotally mounted by means of diametrally opposite first journals (14), said mounting cradle (13) being pivotally mounted in the plough beam carrier (4) by means of diametrally opposite second journals (15), the common rotational axis thereof extending perpendicularly to the common rotational axis of the first journals 914), the cradle (13) and the two pairs of journals (14, 15) forming together the universal joint for the mounting of the piston cylinder (11, 11', 12, 12') in the beam carrier.

## Patentansprüche

1. Überlastmechanismus mit einem einen Pflugkörper (6) tragenden, durch kraftausübende, druckmittelbetriebenene, ebenso in dem Überlastungsmechanismus befindliche Zylinderkolben (11, 11', 12, 12') enthaltene Mittel in der Pflügeposition gehaltenen röhrenförmigen Pflugbalken (3), bei dem der Pflugbalken (3) und der davon getragene Pflugkörper (6) zum vorübergehenden Verlassen der Pflügeposition eingerichtet sind, wenn der Pflugkörper (6) auf ein Hindernis (8) im Boden stößt, das besagte Hindernis durch eine Rotation des Pflugbalkens (3) um ein mit eine Konsole (4) gelenkig zusammen wirkendes erstes Ende (16, 16') umgangen wird, und bei dem der Pflugbalken (3) anschließend in seine mit der Pflügeposition des Pflugkörpers (6) korrespondierende Position zurückgebracht wird, wobei der Kolbenzylinder (11, 11', 12, 12') innerhalb der ihn umgebenden Konsole (4) mittels einer Universalverbindung (13, 14, 15) montiert, und das freie Ende der Kolbenstange (12) des Kolbenzylinders (11, 11', 12, 12') an dem vorderen Ende einer Strebe (10) im Bereich des vorderen Endes des röhrenförmigen Pflugbalkens (3) befestigt, und die Strebe (10) mit ihrem rückwärtigen Ende an einem zweiten axialen Ende des rohrenförmigen Pflugbalkens (3) im Bereich der Verbindung für den Pfugkörper (6) befestigt ist.

2. Überlastmechanismus nach Anspruch 1, dadurch gekennzeichnet, daß die Universalverbindung (13, 14, 15) des weiteren ein verschwenkbares Montagegestell (13) umfaßt, in dem der Kolbenzylinder (11, 11', 12, 12') mittels einander diametral gegenüberliegender Achsen (14), und das Montagegestell (13) mittels zweier einander diametral gegenüberliegender Achsen (15) verschwenkbar in der Konsole (4) montiert sind, sich deren gemeinsame Rotationsachse senkrecht zu der gemeinsamen Rotationsachse der ersten Achsen (14) erstreckt, und somit das Montagegestell (13) und die zwei Achsenpaare (14, 15) gemeinsam die Universalverbindung für die Montage des Kolbenzylinders (11, 11', 12, 12') in dem Pflugbalken bilden.

## Revendications

1. Mécanisme de protection contre les surcharges comprenant une poutre tubulaire de chariot (1) portant un corps de labourage (6) retenu en position de labourage au moyen d'un dispositif de création de charge comportant un groupe à cylindre et piston commandé par pression de fluide (11,11', 12,12') également inclus dans le dit mécanisme de protection de surcharge, dans lequel la poutre de charrue (3) et le corps de labourage (6) porté par celle-ci sont prévus pour quitter temporairement la position de labourage lorsque le corps de labourage (6) heurte un obstacle (8) dans le sol, ledit obstacle étant franchi grâce à une rotation de la poutre de charrue (3) à sa première extrémité qui coopère de façon articulée (16, 16') avec un support de poutre (4), et dans lequel la poutre de charrue (3) est ensuite ramenée à la position correspondant à la position de labourage du corps de labourage (6), le groupe à cylindre et piston (11,11',12,12') étant monté à l'intérieur du support de poutre de charrue (4), et étant entouré par ce dernier, au moyen d'un joint universel (13,14,15), caractérisé en ce que l'extrémité libre de la tige de piston (12) du groupe à cylindre et piston (11,11',12,12') est attachée à l'extrémité avant d'une entretoise (10) dans la région de l'extrémité avant de la poutre tubulaire de charrue (3), ladite entretoise (10) étant attachée, à son extrémité arrière, à une deuxième extrémité axiale de la poutre tubulaire de charrue (3) dans la région de fixation du corps de labourage (6).

2. Mécanisme de protection contre les surcharges selon la revendication 1, caractérisé en ce que le joint universel (13,14,15)comprend en outre un berceau de montage inclinable (13) dans lequel le groupe à cylindre et piston (11,11',12,12') est monté de façon pivotante par l'intermédiaire de premiers pivots diamétralement opposés (14), ledit berceau de montage (13) étant monté de façon pivotante dans le support de poutre de charrue (4) par l'intermédiaire de seconds pivots diamétralement opposés (15) dont l'axe de rotation commun s'étend perpendiculairement à l'axe de rotation commun des premiers pivots (14), le berceau (13) et les deux paires de pivots (14,15) constituant ensemble le joint universel pour le montage du groupe à cylindre et piston (11,11',12,12') dans le support de poutre.
